# EUROPEAN PATENT SPECIFICATION

(11) **EP 3 015 179 B1**
(45) Date of publication and mention of the grant of the patent: **28.03.2018**
(21) Application number: 14818545.7
(22) Date of filing: 02.04.2014
(51) Int. Cl.: B08B 9/093, B08B 9/087, B08B 1/04, B08B 3/02, B60S 3/00, A47L 11/38, B08B 1/00, B25J 11/00, B25J 5/00, B25J 9/10

(54) **CLEANING ROBOT FOR REFRIGERATED CHAMBERS AND TRAILERS**
REINIGUNGSROBOTER FÜR GEKÜHLTE KAMMERN UND ANHÄNGER
ROBOT NETTOYEUR POUR CHAMBRES ET REMORQUES FRIGORIFIQUES

(30) Priority: 26.06.2013 ES 201330798
(43) Date of publication of application: 04.05.2016
(73) Proprietor: Ecoteck Aplicaciones Ambientales, S.L., 46770 Xeraco (Valencia) (ES)
(72) Inventor: GARCIA PONS, Salvador, E-46770 Xeraco (Valencia) (ES)
(74) Representative: Carpintero Lopez, Francisco
(86) International application number: PCT/ES2014/070256
(87) International publication number: WO 2014/207274

(56) References cited:
- WO-A1-2010/052318
- WO-A1-2011/141354
- DE-A1- 19 651 693
- DE-C1- 4 310 470
- DE-U1-202011 052 050
- ES-A1- 2 263 398
- FR-A1- 2 925 372
- FR-A1- 2 925 372

## Description

### OBJECT OF THE INVENTION

The present invention falls within the field of cleaning and disinfecting cold stores and refrigerated trailers.

The object of the present invention is a new robot designed to clean and disinfect the walls and ceilings of cold stores and refrigerated trailers.

### BACKGROUND OF THE INVENTION

For hygiene reasons, the cold stores and refrigerated trailers used for transporting food require an especially thorough clean capable of preventing the appearance of bacteria that may cause outbreaks of infection that are harmful to human beings.

Currently, these facilities are cleaned in a rather rudimentary manner by operators using a hose, a broom or large brush, and some kind of disinfecting chemical substance, such as bleach or similar products, for example.

This cleaning method has several drawbacks, among which the following may be mentioned: high water usage; the risk that after cleaning there are residual amounts of disinfectant that may come into contact with the food; the risk that the operators that carry out the cleaning may come into contact with the disinfecting substances used; or the risk to workers due to having to work on ladders, scaffolding, or similar elements in order to adequately clean a very high facility. Document FR 2 925 372 A1 discloses a cleaning robot for the walls and ceiling of a facility in accordance with the preamble of claim 1.

### DESCRIPTION OF THE INVENTION

The present invention describes a new cleaning robot that resolves the aforementioned drawbacks due to the fact that it has means for cleaning and disinfecting the walls and ceilings of a facility using high-pressure steam, thus preventing the need to use disinfecting chemical products. Moreover, its special characteristics enable it to access walls and ceilings even in very high facilities, such that it is not necessary for the operators to do this work at a height.

Although the cleaning robot of the invention has been designed especially for cleaning facilities such as cold stores and refrigerated trailers, where food products are usually stored, the use thereof is not limited to this type of facility, meaning it could be used in any large facility that must be thoroughly cleaned.

The cleaning robot of the present invention essentially comprises a mobile carriage that is able to move throughout the facility and an articulated hydraulic mechanism fastened to said mobile carriage and equipped with a cleaning head, where the articulated hydraulic mechanism is configured to enable said cleaning head to access the surface of the walls and ceilings that are to be cleaned. In this context, the term "access" refers to the fact that the articulated mechanism is able to move the cleaning head such that it comes into contact with the surface of the walls and ceilings that are going to be cleaned.

The cleaning head is the element that actually cleans the walls and ceilings of the facility. It is a head equipped with a cleaning surface that comprises perimeter rubber pieces that project from said cleaning surface, and that are configured to create a hermetically closed space when they rest against a surface to be cleaned. In this context, the term "hermetic" should be interpreted as sufficiently hermetic so as to prevent the steam used for cleaning and the subsequent waste water from leaking out of said closed space. In the inside of the cleaning surface, the contour of which consists of the perimeter rubber pieces, the head comprises pressurised steam injection areas, mobile brush areas to scrub the surface to be cleaned, and suction areas to collect the waste water from the cleaning.

Preferably, the cleaning surface is flat, since the walls and ceilings of the facilities to be cleaned are also normally flat. However, it would be possible to design a cleaning head with a cleaning surface that is not flat. For example, the cleaning surface could have a certain curve in order to adapt to the shape of the walls of a cylindrical tank or similar.

With regards to the shape, both the cleaning surface and the distribution of the steam injection areas, the mobile brush areas and the suction areas, may be implemented in different shapes. For example, cleaning surfaces equipped with edges having a particular shape could be used, with the object of better accessing the most inaccessible parts of the facilities to be cleaned. Round cleaning surfaces or cleaning surfaces with rounded contours could also be used. However, in a preferred embodiment of the invention, the cleaning surface is rectangular in shape, since this shape is generally the most efficient for cleaning the most common facilities with a square or rectangular floor plan with vertical walls and a flat ceiling.

When the cleaning surface has a rectangular shape, the steam injection areas, brush areas and suction areas are preferably configured in the cleaning head as longitudinal bands. For example, the cleaning surface of the cleaning head may comprise two longitudinal suction bands next to the perimeter rubber pieces, two longitudinal brush bands arranged between said suction bands, and three longitudinal steam injection bands that are inserted between the aforementioned suction bands and brush bands. This configuration, in accordance with the tests carried out by the inventors of the present application, enables surfaces to be cleaned efficiently as well as appropriately draining the waste water.

Moreover, the cleaning head is preferably interchangeable, which enables an appropriate cleaning head to be used for each type of surface that is to be cleaned.

With regards to the articulated hydraulic mechanism upon which the cleaning head is mounted, it may also be configured in different ways provided that it enables the cleaning head to access the surface of the walls and ceilings that are to be cleaned, although in accordance with a preferred embodiment of the invention it comprises the following elements:
- A rotating plate mounted on the mobile carriage.
- A first lifting arm, which extends vertically and the proximal end of which is connected to said rotating plate.
- A second positioning arm, which has a proximal end connected via an articulation to a distal end of said first lifting arm.
- A third orientation arm, which has a proximal end connected to a distal end of said second positioning arm and a distal end to which the cleaning head is fastened, said third orientation arm further comprising an intermediate articulation that enables the cleaning head to be oriented. Preferably, this intermediate articulation is configured so as to enable a rotation of between 0-90°, thus enabling the cleaning head to be vertically oriented upwards in order to clean ceilings and horizontally in order to clean walls.

In this document, the term "proximal" refers to the end of an element that is situated closest to the operator that handles the robot, normally the lower end or one closest to the ground. The term "distal" refers to the end of an element that is situated furthest from the operator, normally the upper end or the one furthest from the ground.

Moreover, of all the elements, the cleaning robot of the invention preferably further comprises all the auxiliary elements necessary for the operation of the mobile carriage, the articulated hydraulic mechanism, and the cleaning head. These auxiliary elements include an energy source, such as batteries or a connection to the electricity grid, to operate the various pumps and electric motors that cause the mobile carriage to move and operate the hydraulic mechanism, tanks for the cleaning water and waste water, the necessary elements for generating pressurised steam, etc.

### BRIEF DESCRIPTION OF THE FIGURES

Figure 1 shows a perspective view of an exemplary cleaning robot in accordance with the invention with the cleaning head oriented to clean ceilings.
Figures 2-3 respectively show a profile view and a plan view of the cleaning robot of figure 1 with the cleaning head oriented to clean ceilings.
Figure 4 shows a profile view of the cleaning robot of figure 1 with the cleaning head oriented to clean walls.
Figure 5 shows a detailed view of the cleaning surface of the cleaning head of the robot in figure 1.

### PREFERRED EMBODIMENT OF THE INVENTION

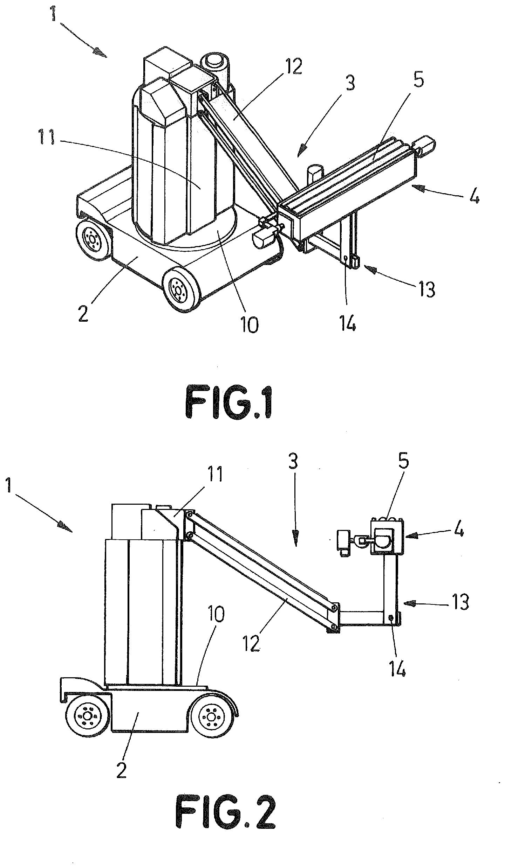

Figures 1, 2, 3 and 4 show distinct views of a cleaning robot (1) in accordance with the invention where the different elements that make it up may be seen.

The lower portion of the robot (1) is made up of a mobile carriage (2) that moves on four wheels and which enables the robot (1) to move through the facility that is to be cleaned.

The articulated hydraulic mechanism (3) is situated on top of the mobile carriage (2) and in this example comprises a first lifting arm (11), a second positioning arm (12) and a third orientation arm (13).

The first lifting arm (11) is able to move upwards vertically up to a length of 17 meters, thus enabling the cleaning head (4) of the robot (1) to access even the highest areas of the facilities to be cleaned. The distal end of the first lifting arm (11) is connected by means of an articulation at the proximal end of the second positioning arm (12). This second positioning arm (12) moves rotationally around said articulation situated at the proximal end thereof, similarly to that of a lifting crane, enabling the distal end thereof to move upwards and downwards. In turn, the proximal end of the third orientation arm (13) is connected to said distal end of the second positioning arm (12). This third orientation arm (13) has the cleaning head (4) fastened to the distal end thereof, and an intermediate articulation (14) of between 0° and 90° enables it to be appropriately oriented according to the surface that is to be cleaned.

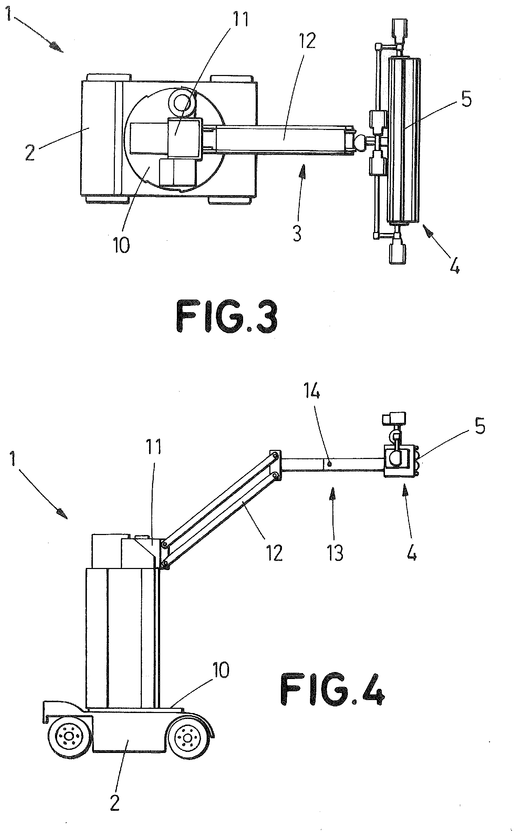

Specifically, in figures 1, 2 and 3, the intermediate articulation (14) of the third orientation arm (13) forms 90°, which enables the cleaning surface (5) of the head (4) to be vertically oriented upwards in order to clean ceilings. On the contrary, figure 4 shows how the intermediate articulation (14) of the third orientation arm (13) forms 0°, the cleaning surface (5) of the head (4) in this case being horizontal oriented forwards in order to clean walls. It is understood that other intermediate orientations between these two end positions would be possible.

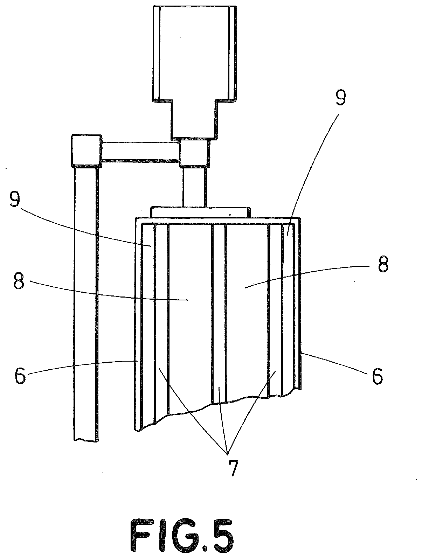

Fig. 5 shows a detailed view of the cleaning surface (5) of the head (4) where the parts that make it up may be seen. The cleaning surface (5) of the cleaning head (4) of this example has a flat rectangular shape, the outer perimeter of the rectangle being equipped with perimeter rubber pieces (6) that project from the plane of said surface (5), such that when the surface (5) rests on a wall or ceiling that is to be cleaned, the perimeter rubber pieces (6) are pressed against said wall or ceiling and create a hermetically closed space in the inside thereof.

Inside said perimeter delimited by the rubber pieces (6), the cleaning surface (5) has two longitudinal suction bands arranged next to the rubber pieces (6) of the long sides of the rectangle, two longitudinal mobile brush bands (8) arranged afterwards, and lastly three steam injection bands (7) inserted between the suction bands (9) and the brush bands (8).

Thus, once the cleaning surface (5) of the cleaning head (4) has been positioned against the surface that is to be cleaned, pressurised steam starts to be injected through the steam injection bands (7). At the same time, the brushes of the band (8) begin to move, whether through rotation, vibration, etc. The mechanical scrubbing action of the brushes, combined with the action of the jets of high-temperature, pressurised steam, thoroughly cleans the surface to be cleaned, the waste water being extracted by means of the suction bands (9). The high temperature of the pressurised steam considerably increases the disinfecting power inside the closed space formed by the perimeter rubber pieces (6), as well as softening the possible existing dirt, which is pulled by the brushes and sucked up by the suction bands (9).

This cleaning robot (1) reduces water consumption by 90% in relation to the amount of water normally used during cleaning work carried out by hand with a hose and broom. Furthermore, since the work is automated, it eliminates the risk to people, both due to inhalation of chemical products and risk of falling, since at no time do people come into contact with any chemical product or carry out work at a height. The execution time for cleaning work is also significantly reduced, since only one person is needed to control the robot (1) compared to the two or three people required to carry out the work according to the traditional manner. Moreover, the robot (1) of the invention may be handled with the help of a remote panel or remote control, thus facilitating the work of the corresponding operator.

## Claims

1. A cleaning robot (1) for the walls and ceiling of a facility, which comprises a mobile carriage (2) in order to move throughout said facility and an articulated hydraulic mechanism (3) fastened to said mobile carriage (2) and equipped with a cleaning head (4), where said articulated hydraulic mechanism (3) is configured to enable the cleaning head (4) to access the surface of the walls and ceilings that are to be cleaned, said cleaning robot (1) being **characterised in that** the cleaning head (4) comprises a cleaning surface (5) that in turn comprises projecting perimeter pieces of rubber (6) configured to create a hermetically closed space when they rest on a surface to be cleaned; there being arranged inside said cleaning surface (5) delimited by the perimeter rubber pieces (6) pressurised steam injection areas (7), mobile brush areas (8) to scrub the surface to be cleaned, and suction areas (9) to collect the cleaning waste water.

2. The cleaning robot (1) according to claim 1, wherein the cleaning surface (5) is flat.

3. The cleaning robot (1) according to claim 2, wherein the cleaning surface (5) is rectangular-shaped.

4. The cleaning robot (1) according to claim 3, wherein the steam injection areas (7), the brush areas (8) and the suction areas (9) are configured on the flat cleaning surface (5) in the form of longitudinal bands.

5. The cleaning robot (1) according to claim 4, wherein the cleaning surface (5) comprises two longitudinal suction bands (9) next to the perimeter rubber pieces (6), two longitudinal brush bands (8) arranged between said suction bands (9), and three longitudinal steam injection bands (7) that are inserted between said suction bands (9) and brush bands (8).

6. The cleaning robot (1) according to any of the preceding claims, wherein the cleaning head (4) is interchangeable.

7. The cleaning robot (1) according to any of the preceding claims, wherein the articulated hydraulic mechanism (3) comprises:
- a rotating plate (10) mounted on the mobile carriage (2);
- a first lifting arm (11), which extends vertically and the proximal end of which is connected to said rotating plate (10);
- a second positioning arm (12), which has a proximal end connected via an articulation to a distal end of said first lifting arm (11); and
- a third orientation arm (13), which has a proximal end connected to a distal end of said second positioning arm (12) and a distal end to which the cleaning head (4) is fastened, said third orientation arm (13) further comprising an intermediate articulation (14) that enables the cleaning head (4) to be oriented.

8. The cleaning robot (1) according to claim 7, wherein the intermediate articulation (14) of the third orientation arm (13) is configured to enable a rotation of between 0-90°, enabling the cleaning head (4) to be vertically oriented upwards in order to clean ceilings and horizontally in order to clean walls.

## Patentansprüche

1. Ein Reinigungsroboter (1) für die Wände und die Decke eines Gebäudes, welcher umfasst einen mobilen Wagen (2), damit er sich überall in der besagten Anlage bewegen kann, und einen beweglichen hydraulischen Mechanismus (3), welcher an besagtem mobilen Wagen (2) befestigt ist und ausgerüstet ist mit einem Reinigungskopf (4), wobei der besagte bewegliche hydraulische Mechanismus (3) konfiguriert ist, um dem Reinigungskopf (4) den Zugang zur Oberfläche der zu reinigenden Wände und Decken zu ermöglichen, wobei dieser Reinigungsroboter **dadurch charakterisiert ist, dass** der Reinigungskopf (4) eine Reinigungsoberfläche (5) umfasst, welche abwechselnd vorstehende Umfangsstücke (6) aus Gummi aufweist, die konfiguriert sind, um einen hermetisch abgeschlossenen Raum zu erzeugen, wenn sie auf einer zu reinigenden Oberfläche aufliegen; wobei innerhalb der besagten Reinigungsoberfläche (5) abgegrenzt durch die Umfangsstücke (6) aus Gummi mit Druck beaufschlagte Dampfinjektionsflächen (7), mobile Bürstenflächen (8), um die zu reinigende Oberfläche zu schrubben, und Saugflächen (9), um das Reinigungsabwasser zu sammeln, angeordnet sind.

2. Der Reinigungsroboter (1) gemäß Anspruch 1, worin die Reinigungsoberfläche (5) flach ist.

3. Der Reinigungsroboter (1) gemäß Anspruch 2, worin die Reinigungsoberfläche (5) die Form eines Rechteckes hat.

4. Der Reinigungsroboter (1) gemäß Anspruch 3, worin die Dampfinjektionsflächen (7), die Bürstenflächen (8) und die Saugflächen (9) auf der flachen Reinigungsoberfläche (5) in der Form von längslaufenden Bändern angeordnet sind.

5. Der Reinigungsroboter (1) gemäß Anspruch 4, worin die Reinigungsoberfläche (5) zwei längslaufende Saugbänder (9) in Nachbarschaft zu den Umfangsstücken (6) aus Gummi, zwei zwischen den besagten Saugbändern (9) angeordnete längslaufende Bürstenbänder (8), und drei längslaufende Dampfinjektionsbänder (7), welche zwischen den besagten Saugbändern (9) und den besagten Bürstenbändern (8) eingefügt sind, umfasst.

6. Der Reinigungsroboter (1) gemäß einem der vorgehenden Ansprüche, worin der Reinigungskopf (4) austauschbar ist.

7. Der Reinigungsroboter (1) gemäß einem der vorgehenden Ansprüche, worin der bewegliche hydraulische Mechanismus (3) umfasst:
- eine rotierende Platte (10), die auf dem mobilen Wagen (2) befestigt ist;
- einen ersten hebenden Arm (11), der sich vertikal erstreckt und dessen nahes Ende mit der besagten rotierenden Platte (10) verbunden ist;
- einen zweiten positionierenden Arm (12), bei dem ein nahes Ende mittels eines Gelenkes mit einem entfernten Ende des besagten ersten hebenden Arms (11) verbunden ist; und
- einen dritten Orientierungsarm (13), bei dem ein nahes Ende mit einem entfernten Ende des besagen zweiten positionierenden Arms (12) und ein entferntes Ende, an welchem der Reinigungskopf (4) befestigt ist, wobei der besagte dritte Orientierungsarm (13) zusätzlich ein intermediäres Gelenk (14) umfasst, welches dem Reinigungskopf (4) ermöglicht, orientiert zu werden.

8. Der Reinigungsroboter (1) gemäß Anspruch 7, worin das intermediäre Gelenk (14) des dritten Orientierungsarmes (13) konfiguriert ist, eine Rotation von zwischen 0 - 90° zu ermöglichen, wodurch es dem Reinigungskopf (4) ermöglicht wird, senkrecht aufwärts orientiert zu werden, um Decken zu reinigen, und horizontal, um Wände zu reinigen.

## Revendications

1. Robot nettoyeur (1) pour les parois et le plafond d'une installation comportant un chariot mobile (2) pour se déplacer à l'intérieur de l'installation et un mécanisme hydraulique articulé (3) fixé au chariot mobile (2) et équipé d'une tête de nettoyage (4),
- le mécanisme hydraulique articulé (3) étant configuré pour permettre à la tête de nettoyage (4) d'accéder à la surface des parois et du plafond à nettoyer,
robot nettoyeur (1) **caractérisé en ce que**
la tête de nettoyage (4) comporte une surface de nettoyage (5) qui elle-même comporte des pièces périphériques en caoutchouc (6), en saillie, configurées pour créer un espace hermétiquement fermé lorsqu'elles s'appuient contre la surface à nettoyer,
- à l'intérieur de la surface de nettoyage (5) délimitée par les pièces périphériques en caoutchouc (6) il y a des zones d'injection de vapeur sous pression (7), des zones de balais mobiles (8) pour balayer la surface de nettoyage et des zones d'aspiration (9) pour collecter l'eau de nettoyage à évacuer.

2. Robot nettoyeur (1) selon la revendication 1,
**caractérisé en ce que**
la surface de nettoyage (5) est plate.

3. Robot nettoyeur (1) selon la revendication 2,
**caractérisé en ce que**
la surface de nettoyage (5) a une forme rectangulaire.

4. Robot nettoyeur (1) selon la revendication 3,
**caractérisé en ce que**
les zones d'injection de vapeur (7), les zones de balais (8) et les zones d'aspiration (9) sont configurées sous la forme de bandes longitudinales dans la surface de nettoyage plate (5).

5. Robot nettoyeur (1) selon la revendication 4,
**caractérisé en ce que**
la surface de nettoyage (5) comporte deux bandes d'aspiration (9) longitudinales proches des pièces périphériques en caoutchouc (6), deux bandes de balais, longitudinales, (8) entre les bandes d'aspiration (9) et trois bandes longitudinales d'injection de vapeur (7) insérées entre les bandes aspirantes (9) et les bandes de balais (8).

6. Robot nettoyeur (1) selon l'une quelconque des revendications précédentes,
**caractérisé en ce que**
la tête de nettoyage (4) est interchangeable.

7. Robot nettoyeur (1) selon l'une quelconque des revendications précédentes,
**caractérisé en ce que**
- le mécanisme hydraulique articulé (3) comprend :
* une plaque rotative (10) montée sur le chariot mobile (2),
* un premier bras de soulèvement (11) qui s'étend verticalement et dont l'extrémité proximale est reliée à la plaque rotative (10),
* un second bras de positionnement (12) ayant une extrémité proximale reliée par une articulation à l'extrémité distale du premier bras de soulèvement (11), et
* un troisième bras d'orientation (13) qui a une extrémité proximale reliée à l'extrémité distale du second bras de positionnement (12) et la tête de nettoyage (4) est fixée à son extrémité distale, le troisième bras d'orientation (13) comportant en outre une articulation intermédiaire (14) qui permet l'orientation de la tête de nettoyage (4).

8. Robot nettoyeur (1) selon la revendication 7,
**caractérisé en ce que**
l'articulation intermédiaire (14) du troisième bras d'orientation (13) est configuré pour permettre une rotation comprise entre 0° et 90°, pour permettre à la tête de nettoyage (4) d'être orientée verticalement vers le haut pour nettoyer les plafonds et horizontalement pour nettoyer les parois.
